# EUROPEAN PATENT SPECIFICATION

(11) **EP 0 501 719 B1**
(45) Date of publication and mention of the grant of the patent: **17.04.1996**
(21) Application number: 92301520.0
(22) Date of filing: 24.02.1992
(51) Int. Cl.: G11B 23/087

(54) **Tape cassette**
Bandkassette
Cassette à bande

(30) Priority: 25.02.1991 JP 50222/91
(43) Date of publication of application: 02.09.1992
(73) Proprietor: SONY CORPORATION, Tokyo 141 (JP)
(72) Inventor: Fujii, Hiroshi, c/o Patents Div. Sony Corp., Tokyo 141 (JP); Nakagawa, Tomihiro, c/o Patents Div. Sony Corp., Tokyo 141 (JP)
(74) Representative: Purvis, William Michael Cameron

(56) References cited:
- EP-A- 0 289 411
- EP-A- 0 389 279
- EP-A- 0 400 933
- AU-B- 540 710
- DE-A- 3 618 498

## Description

The invention relates to a tape cassette.

It has been previously proposed (e.g. EP-A-0400933) to form a tape cassette with a tape drawing recess into which a tape loading member, for drawing a tape to a front surface of a cassette case, can be inserted.

In the case that such a tape drawing recess is large, that is, it is long in a lateral direction of the cassette case, there is a problem such that the condition of the tape disposed along a front surface of the tape drawing recess becomes unstable.

To avoid such an unstable condition of the tape, tape cassettes have been provided with means for locking tape reels of the cassette when the cassette is in an inoperative condition. However since tape loading is carried out to draw the tape out of the cassette case upon loading the tape cassette into a tape player, it is necessary to unlock the means for locking the tape reels. If there occurs even slight slippage in the timing of the unlocking, the tape can become slackened in the tape cassette with consequent jamming.

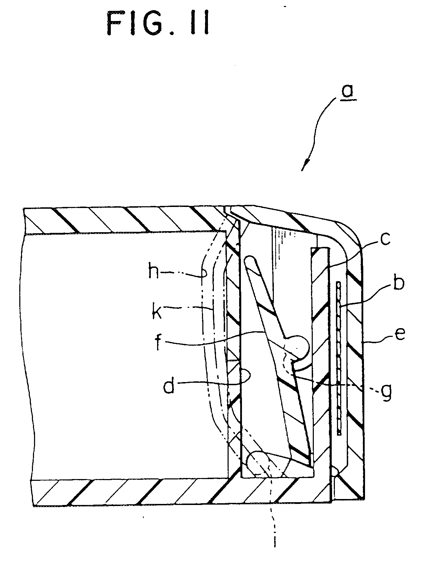

To solve the above problem, it has been proposed to form a tape slack preventing member c as shown in Figure 11 of the accompanying drawings. The tape slack preventing member c projects upwardly from a bottom wall of a cassette case a, and is located close to a back surface of a tape b. Accordingly, even when the tape b is slackened in the tape cassette, it is possible to prevent the tape b from entering a tape drawing recess d.

However, in a tape cassette, e.g. a 8 mm VCR tape cassette, having a front lid e rotatably supported on a front end portion of the cassette case a to cover a front surface of the tape b and a back lid f which is rotated in association with rotation of the front lid e to cover a back surface of the tape b, so as to prevent dust from sticking to a part of the tape b drawn out of the cassette case a in an inoperative condition of the tape cassette, there is a problem in that when both the lids e and f are in an open position, the tape b can enter an undesired region.

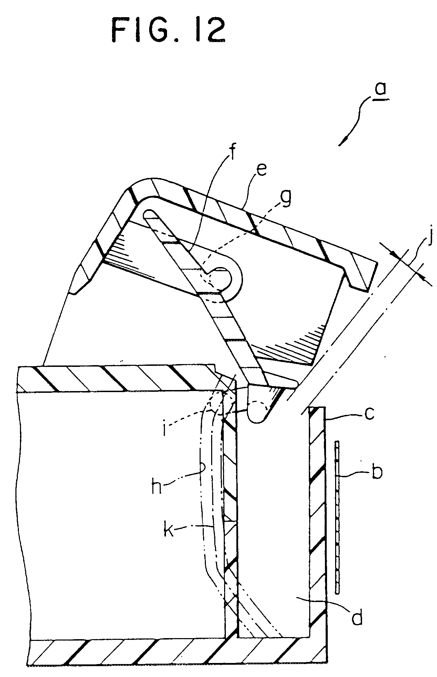

More specifically, Figure 11 shows a closed position where the front and back surfaces of the tape b are covered by the lids e and f, respectively, and Figure 12 shows an open position where both lids e and f have been rotated together to uncover the front and back surfaces of the tape b. During the movement of the back lid f between the closed position and the open position, the attitude of the back lid f is controlled according to a locus of a pivot g supported on the front lid e and a locus of a slide pin i guided by a guide groove h of the cassette case a, so that the back lid f does not contact the tape b during the movement. The locus of the slide pin i is denoted by a chain dotted line k.

However, since the back lid f is moved in a limited space, it necessarily comes close to the tape b. Accordingly, if the back lid f is previously charged with static electricity, a part of the tape b can be lifted by the back lid f during its movement to its open position. As shown in Figure 12, there is defined a gap j between a lower end of the back lid f and an upper end of the tape slack preventing member c in the open position of the back lid f. As a result, there occurs a problem such that the part of the tape b lifted by the back lid f as mentioned above can move to the back side of the tape slack preventing member c through the gap j.

If the tape b partially moves to the rear side of the tape slack preventing member c as mentioned above, tape jamming or damage to the tape loading member or other members and mechanisms can be caused upon tape loading.

According to the invention there is provided a tape cassette having a housing of generally rectangular configuration containing reels on which a supply of tape is wound and having a top wall and a bottom wall and a peripheral wall extending between the top wall and the bottom wall along three sides of the housing so as to leave an opening along the fourth side of the housing, first and second cutouts communicating with the opening and extending along a portion of the fourth side of the housing, the tape being guided between the reels in a path having a run extending along the opening, a front lid mounted on the housing and being movable relative thereto between a closed position covering the opening and an open position exposing the opening, a back lid movable in conjunction with the movement of the front lid between the closed position where the back lid is positioned behind the front lid and the open position where the back lid is removed from behind the tape, a first rib formed on the bottom wall in a tape width direction behind said tape run, and a second rib formed on the edge of the back lid, the second rib facing the first rib so that the top edge of the first rib is located proximate to the tip of the second rib when the front lid is in the open position, whereby said run of the tape cannot pass between the top edge of the first rib (25) and the tip of the second rib (30) and damage to the tape can be prevented.

In such a tape cassette slackness of a tape can be avoided and the tape can be prevented from being drawn into an undesired region to cause damage to the tape or a tape player.

Thus, the second rib is formed on the back lid, and when the back lid is in the open position, the second rib is disposed in contact or proximity to the upper end of the first rib, thereby defining no gap between the first rib and the second rib. Accordingly, even when a part of the tape is lifted by the back lid in the lid opening operation, there is no possibility of the tape passing behind the first rib and tape jamming and damage to a tape player are prevented.

The invention is diagrammatically illustrated by way of example in the accompanying drawings, in which:
Figure 1 is an enlarged perspective view of part of an embodiment of a tape cassette according to the invention in the open position;
Figure 2 is an exploded perspective view of the tape cassette;

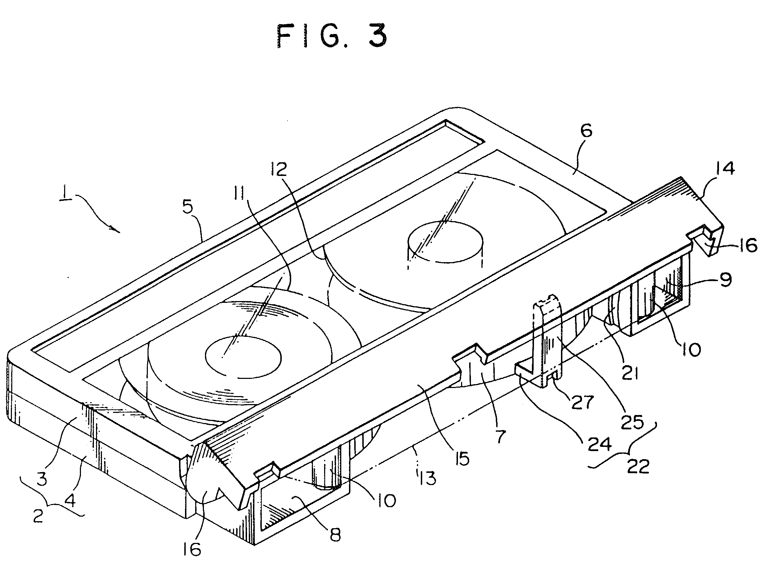

Figure 3 is a perspective view of the tape cassette in the open position;
Figure 4 is an enlarged sectional view of part of the tape cassette in the closed position;
Figure 5 is an enlarged sectional view of another part of the tape cassette in the closed position;
Figure 6 is an enlarged sectional view of the part shown in Figure 4 in the open position;
Figure 7 is an enlarged sectional view of the part shown in Figure 5 in the open position;

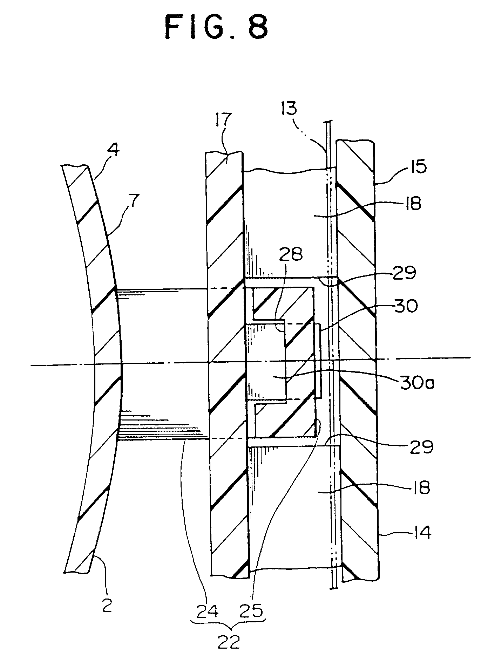

Figure 8 is an enlarged cross section taken on line VIII-VIII in Figure 4;

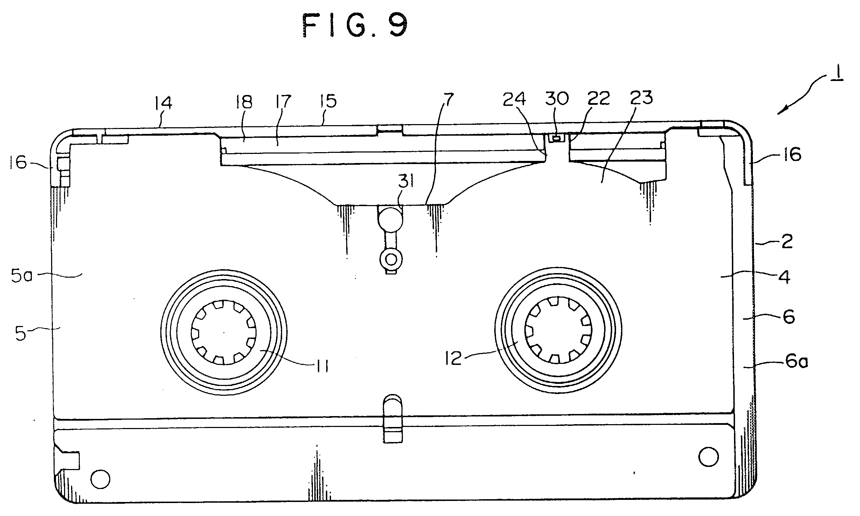

Figure 9 is a bottom plan view of the tape cassette;
Figure 10 is a schematic perspective view of a cassette holder;
Figure 11 is an enlarged sectional view of part of a conventional tape cassette in the closed position; and
Figure 12 is an enlarged sectional view of the part shown in Figure 11 in the open position.

Referring to the drawings, a tape cassette 1 shown is for recording a signal of a high-definition (HD) system (which will be hereinafter referred to as an HD tape cassette). The HD tape cassette in this preferred embodiment has an external form like that of a so-called VHS tape cassette.

The HD tape cassette 1 has the cassette case 2 constructed of an upper half 3 and a lower half 4 connected together to have a rectangular thin box-like configuration.

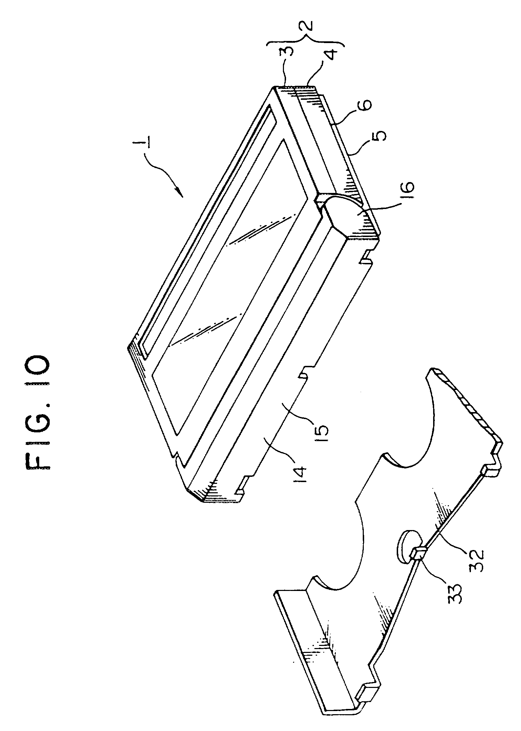

The cassette case 2 includes a main portion 5 having almost the same external form, especially, dimensions (length, width and thickness) as that of the cassette case of the VHS tape cassette. An additional portion 6 projects from a right hand side of the main portion 5 (as viewed in Figure 10) and has a width in the front to rear direction equal to that of the main portion 5, a very small width in the right to left direction, e.g. about 3% of that of the main portion 5, and a thickness slightly smaller than that of the main portion 5, e.g. about 90% or less of that of the main portion 5. An upper surface of the additional portion 6 is flush with an upper surface of the main portion 5. Accordingly, a lower surface 6a of the additional portion 6 is slightly higher than a lower surface 5a of the main portion 5. That is, there is defined a shallow elongate recess extending between the front end and the rear at the right hand edge of the lower surface of the cassette case 2.

An internal space of the main portion 5 is in full communication with that of the additional portion 6.

The cassette case 2 is formed on its front surface with a tape drawing recess 7 which is elongate in the right to left direction. Upon loading the tape cassette 1 into a tape player, a member for drawing a magnetic tape 13 out of the cassette case 2 and a capstan are inserted into the tape drawing recess 7.

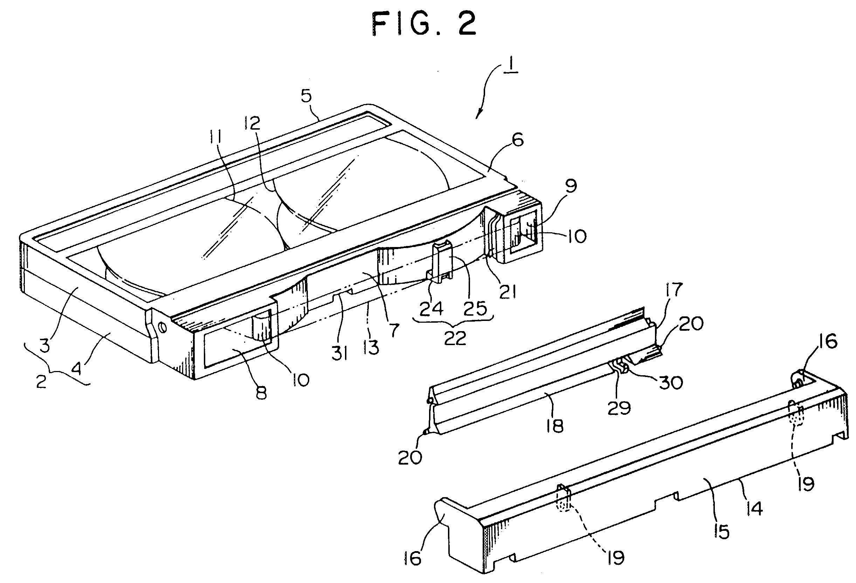

A right hand portion of the tape drawing recess 7 (as viewed in Figure 2) is elongate somewhat more than a left portion thereof. This is due to the following reason. If the cassette case 2 of the HD tape cassette 1 and a cassette case of a VHS tape cassette are superimposed with each other with the left hand side surface of the cassette case 2 positioned flush with the left hand side surface of the cassette case of the VHS tape cassette, a plurality of independent recesses provided in the VHS tape cassette for inserting the tape drawing member and the capstan should be all included in the tape drawing recess 7 of the cassette case 2. This construction enables a tape player to be capable of employing either the VHS tape cassette or the HD tape cassette optionally.

A portion of the right hand surface of the cassette case 2 on the right hand and left hand sides of the tape drawing recess 7 is open to form tape outlets 8 and 9.

Two tape guides 10 are vertically formed in the tape outlets 8 and 9 at their inner ends on the sides of the tape drawing recess 7.

A pair of tape reels 11 and 12 are rotatably accommodated in the cassette case 2, and opposite end portions of the magnetic tape 13 are wrapped around the tape reels 11 and 12. The magnetic tape 13 is partially led out of the cassette case 2 from the tape outlets 8 and 9. In an unloaded condition of the tape cassette 1, the lead-out portion of the magnetic tape 13 outside the cassette case 2 is guided at its opposite ends by the two tape guides 10 in a stretched condition in front of the tape drawing recess 7.

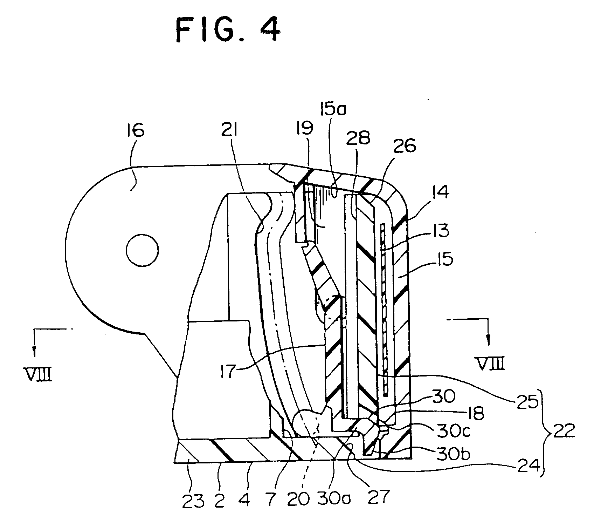

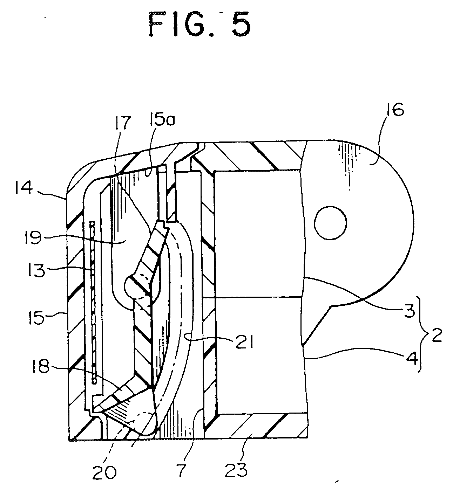

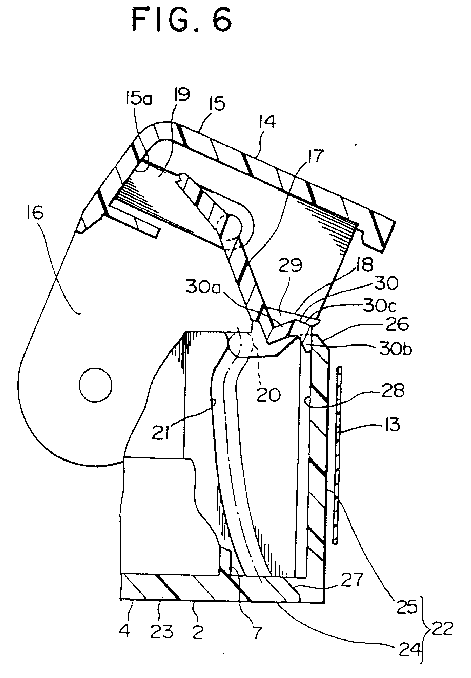

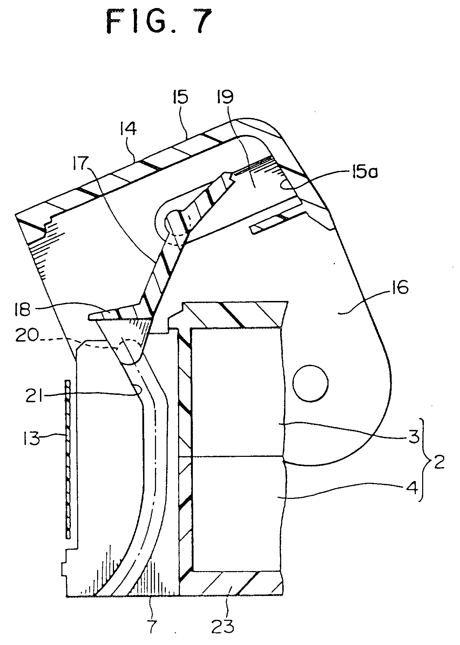

A front lid 14 is provided for opening and closing the front surface of the cassette case 2 from which the magnetic tape 13 is drawn. The front lid 14 is integrally formed with a cover portion 15 having a substantially inverted L-shape in vertical cross section and with a pair of side portions 16 projecting rearwardly from the right and left sides of the cover portion 15. The side portions 16 of the front lid 14 are rotatably supported at two positions near the rear ends thereof to the right and left side surfaces of the cassette case 2 at two positions near the front ends thereof. Accordingly, the front lid 14 can be moved between a closed position shown in Figures 4 and 5 where a front surface of the magnetic tape 13 stretched along the front surface of the cassette case 2 is enclosed and an open position shown in Figures 6 and 7 where the cover position 15 is moved upwardly to open the front surface of the cassette case 2.

A back lid 17 has a substantially thin plate-like shape and a length slightly smaller than the length of the tape drawing recess 7 of the cassette case 2. The back lid 17 is formed at its lower end with a projecting portion 18 projecting frontwardly and inclined downwardly.

The back lid 17 is rotatably supported at opposite side positions near its upper ends to a pair of supporting portions 19 formed on the cover portion 15 of the front lid 14. Further, two pins 20 project sidewardly from the lower ends of the right and left sides of the back lid 17, and a pair of guide grooves 21 are formed on the right and left inner wall surfaces of the tape drawing recess 7 of the cassette case 2. The right and left pins 20 of the back lid 17 are slidably engaged with the right and left guide grooves 21 of the cassette case 2, respectively.

In the closed position of the front lid 14, the back lid 17 is in a closed position where a primary portion thereof covers a back surface of the magnetic tape 13 and a front end of the projecting portion 18 contacts a lower edge portion of a back surface of the cover portion 15 of the front lid 14 to enclose a lower side of the magnetic tape 13 as shown in Figures 4 and 5. In the open position of the front lid 14, the back lid 17 is in an open position where it is located above the front end portion of the cassette case 2 as shown in Figures 6 and 7. During movement of the back lid 17 between the closed position and the open position, the attitude of the back lid 17 is controlled by the position of the portion supported by the front lid 14 and the position of the pins 20 moving along the guide grooves 21.

A tape slack preventing member 22 projects from the lower half 4 at an intermediate position between the middle and the right hand end of the tape drawing recess 7. The tape slack preventing member 22 comprises a base portion 24 integral with and projecting frontwardly from a bottom wall 23 of the lower half 4 and a first rib 25 projecting upwardly from a front end of the base portion 24.

In the closed position of the lids 14, 17 the first rib 25 is located, as shown in Figure 4, intermediate the front lid 14 and the back lid 17 and an upper end of the first rib 25 extends to a position substantially contacting an inner surface of an upper portion 15a of the cover portion 15 of the front lid 14. An upper end surface of the first rib 25 is formed at its front end with an inclined surface 26 which is inclined downwardly.

An opening 27 is formed through a connecting portion of the member 22 between the base portion 24 and the first rib 25 of the tape slack preventing member 22.

A rear surface of the first rib 25 is formed with a slide groove 28 extending from the lower end to the upper end.

The projecting portion 18 of the back lid 17 is formed with an escape cutout 29 so as to avoid interference between the projecting portion 18 and the first rib 25 during rotation of the back lid 17.

A second rib 30 is located in the escape cutout 29 so as to project from the bottom of the cutout 29 substantially at the middle position thereof. The second rib 30 comprises a horizontal portion 30a projecting frontwardly from the lower end of the primary portion of the back lid 17 and a vertical portion 30b projecting downwardly from a front end of the horizontal portion 30a. An outer surface of a connecting portion between the horizontal portion 30a and the vertical portion 30b is formed as an inclined surface 30c inclined at an angle of about 45 degrees.

In the closed position, the vertical portion 30b of the second rib 30 is located in the opening 27 of the tape slack preventing member 22. During the rotation of the back lid 17 to the open position, the major part of the second rib 30 slides in the slide groove 28 of the first rib 25. When the open position is reached as shown in Figure 6, a front surface of the lower end portion of the vertical portion 30b of the second rib 30 is pressed into contact with a back surface of the upper end portion of the first rib 25 and engaged in the slide groove 28.

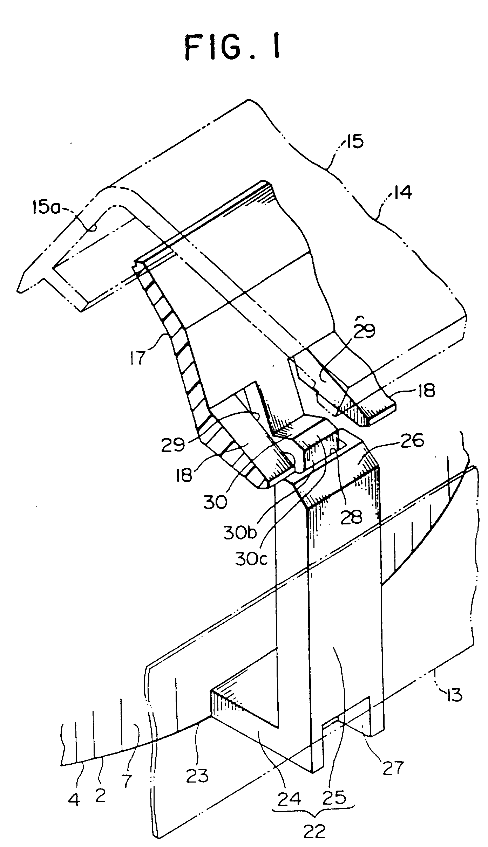

Accordingly, in the open position, as shown in Figures 1 and 6, there is no gap which would allow the magnetic tape 13 to pass between the upper end of the first rib 25 and the lower end of the second rib 30.

Accordingly, even if part of the magnetic tape 13 is lifted by the back lid 17 during the lid opening operation, the magnetic tape 13 cannot pass to the rear of the first rib 25, but will be returned to a normal position.

As mentioned above, the upper end surface of the first rib 25 is formed at its front end with the inclined surface 26 which is inclined downwardly. Accordingly, even if a lower edge of the magnetic tape 13 lifted by the back lid 17 should ride up onto the upper end surface of the first rib 25, the lower edge of the magnetic tape 13 will slip down over the inclined surface 26 to be surely returned to the normal position. The inclined surface 30c of the second rib 30 has the same function as that of the inclined surface 26 of the first rib 25.

An erroneous insertion preventing groove 31 is formed at the middle of the front end portion of the bottom wall 23 of the cassette case 2 and extends in the front to rear direction into the tape drawing recess 7. When the tape cassette 1 is inserted into a cassette holder 32 of a tape player, a projection 33 formed on the cassette holder 32 is engaged in the erroneous insertion preventing groove 31. Accordingly, in the event that the tape cassette 1 is inserted into the cassette holder 32 with any orientation other than a proper orientation, the projection 33 of the cassette holder 32 interferes with the tape cassette and prevents the insertion of the tape cassette 1 with an erroneous orientation.

While the VHS tape cassette is also provided with a similar erroneous insertion preventing groove, the erroneous insertion preventing member 31 of the tape cassette 1 in this preferred embodiment is wider than that of the VHS tape cassette, and the projection 33 of the cassette holder 32 is accordingly wider than that of a cassette holder for the VHS tape cassette. Accordingly, in the event that an attempt is made to load a VHS tape cassette into a tape player dedicated for HD tape cassettes the projection 33 cannot be engaged in the erroneous insertion preventing groove of the VHS tape cassette and prevents such erroneous insertion.

While the embodiment of the invention described is applied to the HD tape cassette having an external form like that of the VHS tape cassette, it is applicable to tapes cassettes of other kinds.

## Claims

1. A tape cassette (1) having a housing (2) of generally rectangular configuration containing reels (11, 12) on which a supply of tape (13) is wound and having a top wall and a bottom wall (23) and a peripheral wall extending between the top wall and the bottom wall (23) along three sides of the housing (2) so as to leave an opening (7) along the fourth side of the housing, first and second cutouts communicating with the opening (7) and extending along a portion of the fourth side of the housing, the tape (13) being guided between the reels (11, 12) in a path having a run extending along the opening (7), a front lid (14) mounted on the housing (2) and being movable relative thereto between a closed position covering the opening (7) and an open position exposing the opening (7), a back lid (17) movable in conjunction with the movement of the front lid (14) between the closed position where the back lid (17) is positioned behind the front lid (14) and the open position where the back lid (17) is removed from behind the tape, a first rib (25) formed on the bottom wall (23) in a tape width direction behind said tape run, and a second rib (30) formed on the edge of the back lid (17), the second rib (30) facing the first rib (25) so that the top edge of the first rib (25) is located proximate to the tip of the second rib (30) when the front lid (14) is in the open position, whereby said run of the tape cannot pass between the top edge of the first rib (25) and the tip of the second rib (30) and damage to the tape (13) can be prevented.

2. A tape cassette according to claim 1, wherein the first rib (25) is formed on its rear surface with a slide groove (28) extending to an upper end of the first rib (25), wherein when the back lid (17) is rotated, the second rib (30) slides in the slide groove (28) of the first rib (25), and when the back lid (17) reaches the open position, a tip portion of the second rib (30) is disposed at the upper end of the first rib (25) in the slide groove (28), whereby there is no gap between the first rib (25) and the second rib (30).

3. A tape cassette according to claim 1 or claim 2, wherein the first rib (25) is formed at its upper front end with an inclined surface (26) which is inclined downwardly.

4. A tape cassette according to any one of claims 1 to 3, wherein the second rib (30) is formed at its upper front end with an inclined surface (30c) inclined downwardly.

5. A tape cassette according to any one of claims 1 to 4, wherein the second rib (25) is formed at its tip with a hook-shaped portion (30b).

6. A tape cassette according to claim 5, wherein the first rib (25) is formed at its base portion with an opening (27) for locating the hook-shaped portion (30b) when the front lid (14) is in the closed position.

## Patentansprüche

1. Bandkassette (1) mit einem Gehäuse (2) von allgemein quaderförmiger Konfiguration, das Bandspulen (11, 12) enthält, auf welche ein Bandvorrat (13) aufgewickelt ist, und welches aufweist:
eine obere Wand und eine untere Wand (23) und eine Seitenwand, welche sich zwischen der oberen Wand und der unteren Wand (23) entlang dreier Seiten des Gehäuses (2) erstreckt, so daß eine Öffnung (7) entlang der vierten Seite des Gehäuses (2) übrig bleibt,
erste und zweite Ausschnitte, welche mit der Öffnung (7) in Verbindung stehen und sich entlang eines Teils der vierten Seite des Gehäuses erstrecken, wobei das Band (13) zwischen den Bandspulen (11, 12) in einem Pfad geführt wird, welcher einen Verlauf aufweist, der sich entlang der Öffnung (7) erstreckt,
eine vordere Verschlußklappe (14), welche an dem Gehäuse (2) befestigt ist und relativ zu diesem zwischen einer geschlossenen Position, welche die Öffnung (7) abdeckt, und einer offenen, die Öffnung (7) freigebenden Position bewegbar ist,
eine hintere Verschlußklappe (17), welche in Verbindung mit der Bewegung der vorderen Verschlußklappe (14) zwischen der geschlossenen Position, in welcher die hintere Verschlußklappe (17) hinter der vorderen Verschlußklappe (14) angeordnet ist, und der offenen Position, in welcher die hintere Verschlußklappe (17) aus einer Lage hinter dem Band entfernt worden ist, bewegbar ist,
einen ersten Steg (25), welcher an der unteren Wand (23) in Richtung der Bandbreite hinter dem Bandverlauf ausgebildet ist, und
einen zweiten Steg (30), welcher an dem Rand der hinteren Verschlußkappe (17) ausgebildet ist, wobei der zweite Steg (30) dem ersten Steg (25) derart gegenüberliegt, daß der obere Rand des ersten Stegs (25) in unmittelbarer Nähe des Endes des zweiten Stegs (30) angeordnet ist, wenn die vordere Verschlußkappe (14) sich in der offenen Position befindet,
wodurch der Bandverlauf nicht zwischen dem oberen Rand des ersten Stegs (25) und dem Ende des zweiten Stegs (30) hindurchführen kann und eine Beschädigung des Bandes (13) verhindert werden kann.

2. Bandkassette nach Anspruch 1, bei welcher der erste Steg (25) an seiner rüchseitigen Fläche mit einer Gleitrille (28) ausgebildet ist, welche sich bis zu einem oberen Ende des ersten Stegs (25) erstreckt, wobei, wenn die hintere Verschlußklappe (17) gedreht wird, der zweite Steg (30) in der Gleitrille (28) des ersten Stegs (25) gleitet, und, wenn die hintere Verschlußklappe (17) die offene Position erreicht, ein Endteil des zweiten Stegs (30) am oberen Ende des ersten Stegs (25) in der Gleitrille (28) angeordnet ist, wodurch zwischen dem ersten Steg (25) und dem zweiten Steg (30) kein Spalt existiert.

3. Bandkassette nach Anspruch 1 oder 2, bei welcher der erste Steg (25) an seinem oberen vorderen Ende mit einer schrägen Oberfläche (26), welche abwärts geneigt ist, ausgebildet ist.

4. Bandkassette nach einem der Ansprüche 1 bis 3, bei welcher der zweite Steg (30) an seinem oberen vorderen Ende mit einer abwärts geneigten schrägen Oberfläche (30c) ausgebildet ist.

5. Bandkassette nach einem der Ansprüche 1 bis 4, bei welcher der zweite Steg (30) an seinem Ende mit einem hakenförmigen Teil (30b) ausgebildet ist.

6. Bandkassette nach Anspruch 5, bei welcher der erste Steg (25) an seinem Basisteil mit einer Öffnung (27) zur Fixierung des hakenförmigen Teils (30b) ausgebildet ist, wenn sich die vordere Verschlußkappe (14) in der geschlossenen Position befindet.

## Revendications

1. Cassette à bande (1) comportant un boîtier (2) de configuration généralement rectangulaire, qui contient des bobines (11, 12) sur lesquelles est enroulée une longueur de bande (13), et présentant une paroi supérieure et une paroi inférieure (23) et une paroi périphérique qui s'étend entre la paroi supérieure et la paroi inférieure (23) le long de trois côtés du boîtier (2) de manière à laisser une ouverture (7) le long dur quatrième côté du boîtier, une première et une seconde découpe qui communiquent avec l'ouverture (7) et s'étendent le long d'une partie du quatrième côté du boîtier, la bande (13) étant guidée entre les bobines (11, 12) sur un trajet présentant un brin qui s'étend le long de l'ouverture (7), un couvercle avant (14) monté sur le boîtier (2) et mobile par rapport à celui-ci entre une position fermée qui couvre l'ouverture (7) et une position ouverte qui expose l'ouverture (7), un couvercle arrière (17) mobile en combinaison avec le mouvement du couvercle avant (14) entre la position fermée dans laquelle le couvercle arrière (17) est placé derrière le couvercle avant (14) et la position ouverte dans laquelle le couvercle arrière (17) est enlevé de derrière la bande, une première nervure (25) formée sur la paroi inférieure (23) dans la direction de largeur de la bande derrière ledit brin de bande, et une seconde nervure (30) formée sur la bordure du couvercle arrière (17), la seconde nervure (30) faisant face à la première nervure (25) de sorte que le bord supérieur de la première nervure (25) est situé à proximité de l'extrémité de la seconde nervure (30) lorsque le couvercle avant (14) est dans la position ouverte, grâce à quoi le ledit brin de la bande ne peut pas passer entre le bord supérieur de la première nervure (25) et l'extrémité de la seconde nervure (30), et on peut empêcher un endommagement de la bande (13).

2. Cassette à bande selon la revendication 1, dans laquelle la première nervure (25) est formée sur sa surface postérieure avec une gorge de coulissement (28) qui s'étend jusqu'à une extrémité supérieure de la première nervure (25), telle que lorsque le couvercle arrière (17) est tourné, la seconde nervure (30) coulisse dans la gorge de coulissement (28) de la première nervure (25), et lorsque le couvercle arrière (17) atteint la position ouverte, une partie d'extrémité de la seconde nervure (30) est disposée à l'extrémité supérieure de la première nervure (25) dans la gorge de coulissement (28), grâce à quoi il n'existe pas d'intervalle entre la première nervure (25) et la seconde nervure (30).

3. Cassette à bande selon l'une ou l'autre des revendications 1 et 2, dans laquelle la première nervure (25) est formée à son extrémité supérieure avant avec une surface inclinée (26) qui est inclinée vers le bas.

4. Cassette à bande selon l'une quelconque des revendications 1 à 3, dans laquelle la seconde nervure (30) est formée à son extrémité supérieure avant avec une surface inclinée (30c) inclinée vers le bas.

5. Cassette à bande selon l'une quelconque des revendications 1 à 4, dans laquelle la seconde nervure (25) est formée à son extrémité avec une partie en forme de crochet (30b).

6. Cassette à bande selon la revendication 5, dans laquelle la première nervure (25) est formée à sa partie de base avec une ouverture (27) pour placer la partie en forme de crochet (30b) lorsque le couvercle avant (14) est dans la position fermée.
